(19) Europäisches Patentamt
European Patent Office
Office européen des brevets

(11) **EP 3 561 021 A1**

(12) **EUROPEAN PATENT APPLICATION**
published in accordance with Art. 153(4) EPC

(43) Date of publication:
**30.10.2019 Bulletin 2019/44**

(21) Application number: **17884831.3**

(22) Date of filing: **22.12.2017**

(51) Int Cl.:
*C09K 5/14* (2006.01)          *F25B 9/00* (2006.01)
*F28D 20/00* (2006.01)

(86) International application number:
**PCT/JP2017/046174**

(87) International publication number:
**WO 2018/117258 (28.06.2018 Gazette 2018/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **22.12.2016 JP 2016249446**

(71) Applicant: **Santoku Corporation
Kobe-shi
Hyogo 658-0013 (JP)**

(72) Inventors:
• **KURIIWA, Takahiro**
  **Kobe-shi**
  **Hyogo 658-0013 (JP)**
• **MATSUMOTO, Yasutomo**
  **Kobe-shi**
  **Hyogo 658-0013 (JP)**

(74) Representative: **Müller-Boré & Partner
Patentanwälte PartG mbB
Friedenheimer Brücke 21
80639 München (DE)**

(54) **COOLING STORAGE MATERIAL AND METHOD FOR PRODUCING SAME, COOLING STORAGE DEVICE, AND REFRIGERATING MACHINE**

(57)    The present invention provides a regenerator material whose filling rate can be improved and falls within a suitable range, and which can thus easily reduce the pressure loss of a refrigerant gas in the regenerator; and a method for producing the regenerator material. The regenerator material of the present invention comprises a sintered body of rare earth element-containing particles, wherein the sintered body has a porosity of 30 to 40%. The regenerator material production method of the present invention comprises the step of sintering rare earth element-containing starting material particles, wherein D50 and D90/10 of the starting material particles are respectively 100 to 320 $\mu$m and 1.5 to 2.5; wherein D10, D50, and D90 indicate the average particle sizes that respectively correspond to the 10th, 50th, and 90th percentiles of the total number of particles in the particle size distribution curve.

Fig. 1

EP 3 561 021 A1

**Description**

Technical Field

The present invention relates to a regenerator material and a method for producing the same; a regenerator; and a refrigerator.

Background Art

In superconducting MRI (magnetic resonance imaging) systems for photographing tomograms in the medical field, maglev trains, superconducting magnetic energy storage (SMES) systems, etc., superconducting magnets have been currently put into practice; or the application of superconducting magnets toward the practical use thereof has been advanced. Superconducting magnets must be cooled to a cryogenic temperature of 4.2K (about -269°C), which is the boiling point of liquid helium (He); however, since liquid helium is expensive and requires a high level of skill for handling, high-performance small refrigerators have been developed as cooling means in substitution for liquid helium. As small refrigerators that have been put into practical use, Gifford-McMahon type small helium refrigerators (GM refrigerators) are known.

In such refrigerators, a regenerator is filled with a regenerator material, and this regenerator material allows the refrigerator to exhibit refrigeration function in the cryogenic temperature region. Conventionally, Cu or Pd has mainly been used as a regenerator material; however, rare earth element-containing regenerator materials such as $HoCu_2$ have recently been used to achieve a lower cryogenic temperature. The regenerator materials are formed into particles. Such regenerator material particles are charged into the regenerator, and a compressed refrigerant gas (e.g., helium gas) is expanded through the regenerator material and undergoes heat exchange with the regenerator material to cool the regenerator material. A repeat of such a cycle attains a cryogenic temperature state.

In the refrigerator, the pressure oscillation, various stresses, impact force, etc., of a refrigerant gas (e.g., helium gas) damage the regenerator material, which causes the pressure loss of the refrigerant gas, thereby reducing the heat exchange efficiency. To prevent such a problem, the development of regenerator materials achieving further increased regenerating performance has been actively conducted. Patent Literature (PTL) 1, for example, discloses a technique in which the particle size and shape of a regenerator material is adjusted to prevent pulverization of the regenerator material and improve thermal shock resistance etc., thereby attaining high refrigerating capacity in the low-temperature region.

Citation List

Patent Literature

PTL 1: JP2010-77447A

Summary of Invention

Technical Problem

Examples of means for improving performance of a refrigerator using a regenerator material include improvement in heat capacity of a regenerator material filling portion (portion filled with a regenerator material) at a specific temperature, and improvement in heat exchange performance between the regenerator material and a refrigerant. The present inventors found that in order for a compressed refrigerant to suitably expand through a regenerator material to efficiently cool the regenerator material, it is important to optimize the airflow resistance (i.e., pressure loss when the refrigerant passes through) required for the refrigerant to pass through the regenerator material filling portion; or to increase the heat exchange area (specific surface area) between the regenerator material and the refrigerant. The regenerator material filling portion must have a suitable connecting flow path; a regenerator material filling portion having a high space occupation rate is not desirable. In contrast, to increase the heat capacity of the regenerator material filling portion, it is also important to use a material having a high specific heat at a specific temperature, and to charge an increased amount of regenerator material; specifically, it is important to fill the portion with the regenerator material with a high space occupation rate.

When regenerator material particles as disclosed in PTL 1 are charged, increasing the filling rate to a certain level or higher is difficult. Further, since the use of a regenerator material having a large particle size decreases the specific surface area, thereby reducing pressure loss, it is difficult to ensure specific heat exchange performance. Accordingly, the refrigerant gas permeability becomes overly high, which allows the refrigerant gas to pass through the regenerator material before exhibiting cooling effects, thus making it impossible for a refrigerator to attain a desired cryogenic temperature region. For example, although the use of a spherical regenerator material having a particle size of about 200 $\mu$m ensures appropriate pressure loss, the filling rate of the regenerator material is not increased, thus failing to enhance the capacity of the regenerator material filling portion.

To solve the above problems, one option may be to additionally use fine powder with the regenerator material particles to increase the filling rate of the regenerator material. In this case, however, the fine powder may clog the flow path; or the refrigerator may malfunction due to the valve becoming stuck because of the blowing of the fine powder, resulting in a problem such that adjusting the filling rate to a desired range becomes difficult. Moreover, there is another problem such that adjusting the particle size distribution for obtaining a fine powder-containing regenerator material is difficult, which reduces productivity. There is still another problem such that the use of a fine powder-containing regenerator material sometimes adversely increases the filling rate too much, which prevents the refrigerant gas from easily passing through the regenerator material, leading to difficulty in exhibiting desired cooling performance. Thus, even in the case of using fine powder to adjust the particle size, there is still a problem such that a desired low-temperature region is not easily attained.

The present invention was made in light of the above. An object of the present invention is to provide a regenerator material whose filling rate can be improved and falls within a suitable range, and which can thus easily reduce the pressure loss of a refrigerant gas in the regenerator; and a method for producing the regenerator material. Another object of the present invention is to provide a regenerator and a refrigerant each containing the aforementioned regenerator material.

Solution to Problem

As a result of extensive research to solve the above problems, the present inventors found that the above problems can be solved by a sintered body of rare earth element-containing particles having a specific particle size distribution. The present inventors thus accomplished the invention.

Specifically, the present invention includes the subject matter described in the following items.

1. A regenerator material comprising a sintered body of rare earth element-containing particles, wherein the sintered body has a porosity of 30 to 40%.

2. The regenerator material according to Item 1, wherein at least a side of the sintered body is covered with a sintered layer, and the sintered layer has a porosity lower than the porosity of the sintered body.

3. The regenerator material according to Item 1 or 2, wherein the sintered body is tapered.

4. The regenerator material according to any one of Items 1 to 3, wherein the rare earth element includes at least one member selected from the group consisting of Ho, Er, Dy, Tb, Yb, and Gd.

5. A method for producing the regenerator material according to any one of Items 1 to 4, the method comprising the step of sintering rare earth element-containing starting material particles, wherein D50 and D90/10 of the starting material particles are respectively 100 to 320 $\mu$m and 1.5 to 2.5; wherein D10, D50, and D90 indicate the average particle sizes that respectively correspond to the 10th, 50th, and 90th percentiles of the total number of particles in a particle size distribution curve.

6. A regenerator comprising the regenerator material according to any one of Items 1 to 4.

7. A refrigerator comprising the regenerator according to Item 6.

Advantageous Effects of Invention

The regenerator material of the present invention can improve its filling rate into the regenerator material filling portion. Moreover, since the regenerator material having an appropriate range of filling rate ensures suitable permeability, the pressure loss of a refrigerant gas in a regenerator also falls within an appropriate range. Accordingly, the regenerator material of the present invention can exhibit high refrigerating capacity, and a refrigerator comprising such a regenerator material in a filling container can exhibit high refrigerating capacity.

The method for producing a regenerator material according to the present invention is suitable as a method for producing the regenerator material mentioned above.

Brief Description of Drawings

Fig. 1 shows an embodiment of the regenerator material of the present invention; more specifically, Fig. 1 is an electron microscope image showing the cross-section of the regenerator material.

Fig. 2 includes graphs each indicating the relationship between the specific heat ($J/K \cdot cm^3$) and temperature (K) of each material.

Fig. 3 is a schematic view showing another embodiment of the regenerator material of the present invention.

Fig. 4 is a schematic view showing another embodiment of the regenerator material of the present invention.

Fig. 5 is a schematic view of the system used for the measurement of pressure loss.

Description of Embodiments

Embodiments of the present invention are detailed below. In this specification, the expression "comprise" and "contain" encompasses the concepts of "comprise," "contain," "consist essentially of," and "consist of."

1. Regenerator Material

The regenerator material according to the present embodiment comprises a sintered body of rare earth element-containing particles, and the porosity of the sintered body is 30 to 40%. Since the regenerator material comprises a sintered body having a specific porosity as a constituent element, the filling rate of the regenerator material charged, for example, into a regenerator can be improved. Further, since the regenerator material having an appropriate range of filling rate ensures appropriate permeability, the pressure loss of the refrigerant gas in the regenerator can also fill within an appropriate range. Accordingly, the regenerator material of the present invention can exhibit high refrigerating capacity, and a refrigerator comprising such a regenerator material in a filling container (regenerator container) can exhibit high refrigerating capacity.

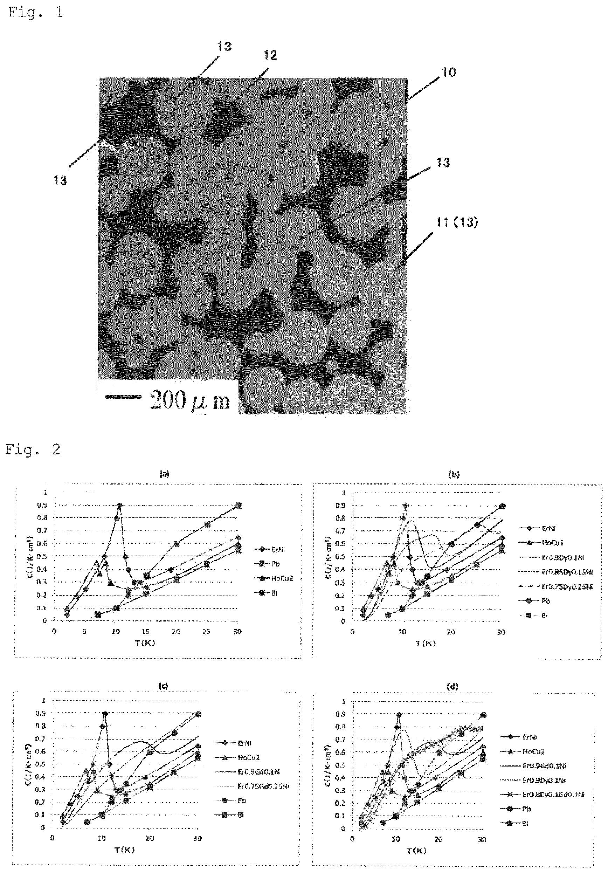

Fig. 1 shows an embodiment of the regenerator material of the present invention. More specifically, Fig. 1 is a scanning electron microscope (SEM) image of the cross-section structure of the regenerator material.

The regenerator material comprises a sintered body 10 as a constituent element. As shown in Fig. 1, the sintered body 10 is formed of a sintered portion 11 and a void portion 12.

The sintered portion 11 is formed by connecting rare earth element-containing particles 13 to one another by sintering. Accordingly, the sintered portion 11 comprises a rare earth element. More specifically, the sintered portion 11 is formed of an alloy containing a rare earth element.

The kind of rare earth elements is not particularly limited, and examples include Y and lanthanoids. From the viewpoint of easily exhibiting excellent regenerating effects, the rare earth element preferably contains at least one member selected from the group consisting of Ho, Er, Dy, Tb, Yb, and Gd.

The void portion 12 is a space formed in the sintered portion 11. Many void portions are formed in the sintered body 10.

The porosity of the sintered body 10 is 30 to 40%. The "porosity of the sintered body" herein indicates the percentage of the total volume of the void portions 12 relative to the apparent volume of the sintered body. The porosity of the sintered body can be calculated from the following formula (1).

$$\text{Porosity of the sintered body (\%)} = \{1 - A/(B \times C)\} \times 100 \qquad (1)$$

In the formula, A is the actual weight of the sintered body, B is the apparent volume of the sintered body, and C is the specific gravity of the sintered body. The apparent volume of the sintered body can be measured, for example, based on the size of the sintered body.

Because the sintered body 10 has a porosity in the above range, the regenerator material according to the present embodiment can be charged into the regenerator at high filling rate. For example, when the regenerator material formed of the sintered body 10 is charged in a filling container in the regenerator, a filling rate of 60 to 70% (filling rate = 100 - porosity of the sintered body) can be attained. The regenerator material according to the present embodiment attains a higher filling rate than a conventional regenerator material filled with fine powder.

As a confirmatory test method of the porosity of the sintered body, image software may be used to confirm the porosity in a sectional photograph.

Next, the feature of the void portion 12 in the sintered body 10 is explained.

The regenerator material is cooled because the refrigerant compressed against the regenerator material passes through the void portions, and undergoes heat exchange with the regenerator material while expanding. Accordingly, the void portions are preferably connected as a refrigerant flow path. From the viewpoint of heat exchange, the refrigerant is preferably not blocked by the clogging of the regenerator material; specifically, void portions that are not unconnected are preferable.

Whether the void portions are unconnected or poorly contribute to heat exchange can be determined in the following manner. First, the volume (V1) of the actual regenerator material that is obtained by dividing the weight of the regenerator material by specific gravity, and the volume (V2) of the regenerator material containing unconnected voids that is determined by the Archimedes method etc. are obtained. From the viewpoint of heat exchange, when the ratio of (V1):(V2) is 1:1.2 or less, specifically, when the value of V2/V1 is 1.2 or less, the sintered body is less likely to be unconnected, and the void portions are less likely to poorly contribute to heat exchange. Accordingly, selecting a starting material or production conditions so that the ratio of (V1):(V2) is 1:1.2 or less is preferable to produce a sintered body.

Since the specific heat capacity of the regenerator material is proportional to the filling rate, the specific heat capacity of the regenerator material according to the present embodiment is higher than that of a conventional regenerator material filled with fine powder. Thus, the regenerator material according to the present embodiment can suppress pulses of generated cold, and can exhibit stable cooling performance.

Since the lower and upper limits of the filling rate of the regenerator material according to the present embodiment are suitably determined, it is possible to prevent a reduction in the refrigerant gas passing amount due to overfill of the regenerator material, a reduction in refrigerator performance accompanied by the above reduction, an increase in the refrigerant gas speed due to insufficient filling amount of the regenerator material, and heat exchange insufficiency between the refrigerant gas and the regenerator material accompanied by the above increase. As a result, since the heat transfer amount between the refrigerant and the regenerator material per cycle can be increased, the refrigerator can easily attain a desired temperature and improve its performance.

In view of the above, the regenerator material according to the present embodiment achieves the aforementioned excellent cooling performance because an appropriate filling rate ensures an appropriate range of the pressure loss of the refrigerant gas.

The porosity of the sintered body 10 is preferably 30 to 37%, and more preferably 30 to 35%. In this range, the pressure loss in the regenerator can be adjusted to a more suitable range, and cooling performance (regenerating performance) can be improved.

The sintered body 10 can be produced by various methods.

For example, the sintered body 10 can be produced by sintering rare earth element-containing particles (hereinbelow referred to as "rare earth element-containing starting material particles," or simply referred to as "starting material particles").

The kind of rare earth element is not particularly limited. From the viewpoint of easily exhibiting excellent regenerating effects, the rare earth element preferably includes at least one member selected from the group consisting of Ho, Er, Dy, Tb, Yb, and Gd.

The formulation of the rare earth element-containing starting material particles is not limited, as long as the starting material particles contain a rare earth element. For example, rare earth element-containing particles have a formulation represented by the following formula (1),

$$RMa \qquad (1)$$

wherein R is at least one member selected from rare earth elements, M is at least one member selected from the group consisting of Ni, Co, Cu, Ag, Al, Ru, In, Ga, Ge, Si, and Rh, and a is an atomic ratio satisfying $0 \leq a \leq 9.0$.

When a is 0 in formula (1), the formulation represented by formula (1) is a rare earth element alone; and when a exceeds 0, the formulation represented by formula (1) is a metal composite material.

Examples of materials represented by formula (1) include $HoCu_2$-based materials, ErNi-based materials, $ErNi_2$-based materials, etc.

The rare earth element-containing starting material particles may be a compound represented by the following formula (2),

$$Er_{1-x}R_xNi_{1+\alpha} \qquad (2)$$

wherein x is $0 < x < 1$, $\alpha$ is $-1 < \alpha < 1$, and R is at least one member selected from rare earth elements.

Examples of rare earth elements in formulae (1) and (2) include Y and lanthanoids (excluding Er). Specific examples of lanthanoids include La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Tm (thulium), Yb (ytterbium), and Lu (lutetium) . R may be one of these elements, or a combination of two or more. R may be, for example, Dy, Gd, or a combination of Dy and Gd.

Fig. 2 (a) to (d) show the relationship between the specific heat ($J/K \cdot cm^3$) and the temperature (K) of each material.

Fig. 2 (b) indicates that the specific heat peak of the compound wherein R is Dy in formula (2) is shifted to the high-temperature side as compared to ErNi. Fig. 2 (b) also indicates that as the replacement amount of Dy is increased to 10 mol%, 15 mol%, and 25 mol%, the specific heat peak is shifted to the high-temperature side, and the shape of the peak is changed to a faceted shape.

The compound wherein R is Gd in formula (2) has a specific heat peak shifted to the high-temperature side (about 8K) as compared to ErNi, and has the following features (Fig. 2 (c)).

1) A clear faceted specific heat peak is not observed.
2) The specific heat at 20K or lower is larger than that of lead.
3) A significant specific heat decrease is observed in the temperature side higher than the specific heat peak.
4) The specific heat at around 9K is almost the same as the specific heat peak of $HoCu_2$ in the high-temperature side.

In particular, the compound wherein 25 mol% of Er is replaced by Gd has a specific heat peak significantly shifted to the high-temperature side (the peak appears on the temperature side higher than 30K) as compared to ErNi, and has the following features (Fig. 2 (c)).

1) A clear faceted specific heat peak is not observed as a result of shifting.
2) The specific heat at about 23K or lower is larger than that of lead.
3) A significant specific heat decrease is not observed at 30K or lower.
4) The specific heat at around 9K is lower than the specific heat peak of $HoCu_2$ in the high-temperature side.

Fig. 2 (d) indicates that the specific heat peak of the compound wherein R in formula (2) is replaced by Dy and Gd (i.e., the compound in which part of Er in ErNi is replaced by the combination of Dy and Gd) is shifted to the high-temperature side as compared to ErNi, and that the shape of the peak is changed to a faceted shape. More specifically, the compound has the following features (Fig 2 (d)).

1) A faceted specific heat peak is observed at around 10 to 25K.
2) The specific heat at 25K or lower is larger than that of lead.
3) A slight specific heat decrease is observed in the temperature side higher than the specific heat peak.
4) The specific heat at around 9K is close to the specific heat of $HoCu_2$.

Materials forming rare earth element-containing starting material particles are not limited to the compounds represented by formulae (1) and (2). Other compounds can be used alone or together with the compounds of formulae (1) and (2). For example, as a material forming rare earth element-containing starting material particles, a compound containing two or more rare earth elements and M in formula (1) can be used. Alternatively, rare earth element-containing oxides or mixtures thereof can also be used.

The starting material particles may contain other materials, as long as the effects of the present invention are not impaired.

The rare earth element-containing starting material particles may be, for example, formed into a spherical shape; however, the shape is not limited thereto. The rare earth element-containing starting material particles may be formed into an oval shape; or a distorted shape, i.e., a distorted spherical or oval shape.

In order to adjust the specific surface area of the sintered body or adjust pressure loss, it is preferable to control the average particle size of the starting material particles, and the particle size distribution. In particular, to adjust the specific surface area of the sintered body, controlling D50 of the starting material particles is effective; and to adjust pressure loss, controlling the D90/D10 of the starting material particles is effective.

D10, D50, and D90 indicate the average particle sizes that respectively correspond to the 10th, 50th, and 90th percentiles of the total number of particles in the particle size distribution curve. In this specification, D10, D50, and D90 are values measured by using a laser diffraction-scattering particle size distribution measuring device ("MICROTRAC 3000," produced by Nikkiso Co., Ltd.).

Because the specific surface area of the sintered body is easily adjusted to a suitable range, D50 of the starting material particles can be set to 100 to 320 $\mu$m, preferably 120 to 320 $\mu$m, and particularly preferably 150 to 300 $\mu$m.

From the same viewpoint, D90/D10 can be set to 1.5 to 2.5. The lower limit of D90/D10 is preferably 1.7, and particularly preferably 1.75. The upper limit of D90/D10 is preferably 2.2, more preferably 2.0, and particularly preferably 1.9. The smaller the value D90/D10, the sharper the particle size distribution. When sintered bodies having the same porosity are compared, those having lower D90/D10 tend to have larger pressure loss, while those having higher D90/D10 tend to have lower pressure loss.

Further, because the filling rate can be easily adjusted to the above range, D10 of the starting material particles is preferably D50 x 0.2 to D50 x 0.99 $\mu$m, and particularly preferably D50 x 0.5 to D50 x 0.99 $\mu$m. Because the filling rate can be easily adjusted to the above range, D90 of the starting material particles is preferably D50 x 1.01 to D50 x 3.0 $\mu$m, and particularly preferably D50 x 1.01 to D50 x 2.5 $\mu$m.

Because the filling rate can be easily adjusted to the above range, D90/D50 of the starting material particles is preferably 1.01 to 3.0, and particularly preferably 1.01 to 2.5. Because the filling rate can be easily adjusted to the above range, D10/D50 of the starting material particles is preferably 0.20 to 0.99.

Sintering of the starting material particles can be performed under suitable conditions, as long as the sintering is performed under conditions wherein the porosity of the resulting sintered body satisfies 30 to 40%.

For example, the sintering temperature can be set to 80 to 99% of the melting point of the alloy of the starting material particles, and more preferably 85 to 95% of the melting point. The melting point can be measured by DTA (differential thermal analysis) of the starting material particles, or with a DSC (differential scanning calorimeter).

The sintering time can be suitably adjusted so that the porosity of the sintered body falls in a target range. The sintering time can be, for example, set to 0.01 to 100 hours. As mentioned above, when the sintering temperature is set to 80 to 99% of the melting point of the alloy of the starting material particles, the sintering time is preferably 2.5 hours or more and 10 hours or less, and more preferably 3 hours or more and 8 hours or less. Even if the sintering temperature is a temperature at which necking can occur and the sintered body is not sufficiently densified, the sintered body can be densified by extending the sintering time to increase pressure loss.

Sintering can be performed in the presence of air or in an inert gas atmosphere. Examples of inert gas include nitrogen, argon, etc. Sintering may be performed in a reduced-pressure inert gas. If necessary, excess powder for prevention of oxidization can also be used during sintering. *Tomoko* is also known as a getter material, which is an additive for preventing oxidization of the sintering target by adding extra powder that is made of the same material as the sintering target (i.e., starting material particles), on the surface of the target. This additive easily prevents surface color deterioration caused by the presence of a very low amount of oxygen.

The container used for sintering the starting material particles is preferably made of ceramic materials or metal materials that do not metallurgically form an alloy with the starting material particles. The device used for sintering is not particularly limited, and a commercially available heating furnace etc. can be used.

If necessary, the outer shape of the resulting sintered body may be adjusted by machine processing; or acid-cleaning etc. may be performed.

The shape and size of the sintered body are not particularly limited, and can be suitably selected according to the shape of the filling container of the regenerator material in the refrigerator. Examples of the shape of the sintered body include cylindrical columns, rectangular columns, and the like. In addition to the above, the tapered columns explained below can also be used considering engagement etc. The shape and size of the sintered body preferably correspond to the shape and size of the filling portion of the regenerator material filling container in the refrigerator.

The shape of the sintered body can be adjusted during sintering of the starting material particles, specifically, by charging the starting material particles into a filling container having a desired shape, followed by sintering. For example, if the sintered body is shaped into a cylindrical column, the starting material particles may be charged into a cylindrical filling container to perform sintering.

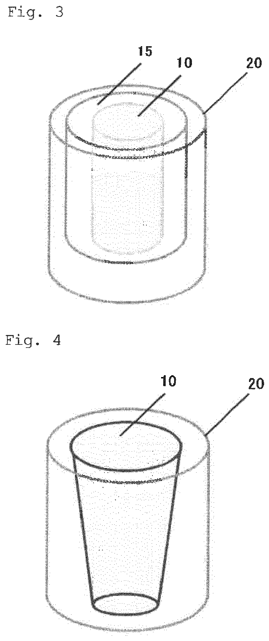

The sintered body may have a multilayer structure. The multilayer structure herein means a structure formed of multiple layers. In one example, such a multilayer structure may be formed of multiple layers having different porosities. The sintered body according to an embodiment shown in Fig. 3 explained below is such an example. Alternatively, the multilayer structure may be formed of multiple layers of different materials. Another multilayer structure may be a laminate obtained by sequentially laminating multiple layers having different specific heat properties.

As long as the effect of the present invention is not impaired, the regenerator material according to the present embodiment may be a combination of the sintered body and materials other than the sintered body. For example, a combination of the regenerator material according to the present embodiment and other regenerator materials filled with particles can be used. It is also possible to combine the regenerator material according to the present embodiment with other regenerator materials that are charged in the form of wires, meshes, or perforated metal sheets. Examples of other usable regenerator materials include copper wires; meshes and perforated metal sheets made of copper; and bismuth-containing materials having the aforementioned shapes. Naturally, the regenerator material according to the present embodiment may consist of the sintered body alone.

The regenerator material according to the present embodiment can be charged into a filling container provided in a regenerator etc. for use. The shape of the sintered body preferably corresponds to the shape of the inside of the filling container, because the filling rate can be easily adjusted to a desired range. More preferably, the sintered body is formed so that it can adhere to the wall inside the filling container. The sintered body can be shaped by machinery processing. In machinery processing, the porosity of portions to be cut may be reduced to improve processability.

For charging the regenerator material into the filling container, if the space between the regenerator and the regenerator material is too wide, a compressed refrigerant will pass through this space, and is unlikely to pass through the regenerator material. Accordingly, an adhesive (e.g., epoxy-based adhesive) may be applied to the side of the sintered body (regenerator material), or the wall inside the filling container, to adhere the regenerator material to the wall inside the filling container. In this case, the space portion between the regenerator material and the regenerator material filling container is plugged with an adhesive etc., and the refrigerant in the refrigerator passes through the regenerator material sintered body. The side of the sintered body means the surface that is in contact with the wall inside the filling container, when the sintered body is charged into the filling container.

It is also possible to charge, into the inside of the filling container, a regenerator material around which a material that is softer (i.e., having a smaller Young's modulus) than the regenerator material, e.g., felt, is wound. Alternatively, a material through which a refrigerant cannot easily pass, such as felt, may be placed in the space between the regenerator material and the filling container. After the regenerator material is charged into the inside of the filling container, it is also possible to charge powder, such as regenerator material powder, into the space between the regenerator material and the filling container, so that the flow resistance of the space portion between the regenerator material and the filling container becomes larger than that of the regenerator material.

To reduce the space between the filling container and the portion filled with the regenerator material, or to improve the ease of incorporation into a refrigerator etc., the regenerator material can be sintered with the filling container. Alternatively, the regenerator material may be sintered with the filling container having a processing table; and the resultant may be used as is, or processed into a final shape after sintering.

Fig. 3 schematically illustrates another example of the regenerator material according to the present embodiment. Fig. 3 shows the state in which the regenerator material that is formed to have the sintered body 10 is charged into the filling container 20.

The regenerator material in the embodiment of Fig. 3 comprises the sintered body 10, and a sintered layer 15 covering the side of the sintered body 10. The side of the sintered body 10 means the curved surface of the sintered body 10 formed in a cylindrical column. The sintered layer 15 has a porosity different from that of the sintered body 10. For example, the sintered layer 15 has a porosity lower than that of the sintered body 10. More specifically, the sintered layer 15 is formed more densely than the sintered body 10. Alternatively, the sintered layer 15 may have a porosity higher than that of the sintered body 10.

As indicated above, the regenerator material according to the embodiment of Fig. 3 has a two-layer structure in which the surface of the layer (sintered body 10) having a porosity of 30 to 40% is covered with another layer having a porosity different from the above layer. The regenerator material according to the embodiment of Fig. 3 is formed in a cylindrical column.

In the regenerator material of Fig. 3, at least the side of the sintered body 10 is preferably covered with the sintered layer 15 having a porosity lower than that of the sintered body 10. When the regenerator material having such a configuration is charged into the filling container 20 of the regenerator, the space occupation rate of the side that is in contact with the filling container 20 is increased, and the processability of the regenerator material of the portion that is in contact with the container is improved. The filling properties of the regenerator material into the filling container 20 can be further improved by adjusting the peripheral shape. When the regenerator material has a two-layer structure, the difference in porosity between the two layers is not particularly limited. For example, the difference in porosity can be suitably determined according to the desired mechanical properties.

As long as the sintered layer 15 has a porosity different from that of the sintered body 10, the sintered layer 15 can be formed of the same material as the sintered body 10.

As in the sintered body 10, the porosity of the sintered layer 15 may be 30 to 40%, or outside this range.

The regenerator material according to the embodiment of Fig. 3 can be produced by a suitable method. For example, a sintered body having a cylindrical cavity in its inside is formed beforehand under the above sintering conditions; and the starting material particles are charged into this cavity, followed by another sintering to produce a regenerator material having a two-layer structure, as in the embodiment of Fig. 3. Thereby, a regenerator material in which the side of the sintered body is covered with the sintered layer can be obtained. A sintered body having a cylindrical cavity in its inside can be produced by charging a material for forming a sintered layer (e.g., the starting material particles) into a container having a cylindrical core, and sintering the material. After sintering, the core is removed; thus, the core portion in the container results in a cavity in the sintered layer.

To produce a regenerator material having a two-layer structure, the layer having a high porosity and the layer having a low porosity may be produced in this order, or vice versa.

Fig. 4 schematically illustrates still another example of the regenerator material according to the present embodiment. Fig. 4 shows the state in which the regenerator material that is formed to have the sintered body 10 is charged into the filling container 20.

As in the regenerator material of the embodiment of Fig. 4, the sintered body 10 may be tapered. In this case, since the space between the regenerator material and the filling container is likely to be reduced, and the airflow resistance of the void portion is less likely to be lowered, it is possible to prevent the (compressed) refrigerant from preferentially passing through the void. Consequently, the amount of the refrigerant passing through the regenerator material is less likely to be reduced, and the regenerator material can easily exhibit desired performance. Specifically, the regenerator material according to the embodiment of Fig. 4 has a shape in which one end of the cylindrical column is tapered. In accordance with this shape, the filling container can be tapered.

In the regenerator material containing the tapered sintered body 10, the filling properties of the regenerator material into the filling container 20 can be further improved. For a regenerator material formed of a sintered body having such a shape, the filling container 20, the inside of which is also tapered, may be selected. Placing the regenerator material containing the tapered sintered body 10 at a specific position of the filling container 20 facilitates adequate engagement between the regenerator material and the filling container. This consequently makes the filling operation of the regenerator material easier.

## 2. Method for Producing Regenerator Material

The regenerator material can be produced by a method comprising the step of sintering rare earth element-containing starting material particles.

The rare earth element-containing starting material particles used herein are the same as those described above. Specifically, starting material particles used in this step have a specific particle diameter (D50) and particle size distribution (D90/D10). By using such starting material particles to produce a regenerator material, a sintered body having the specific porosity range mentioned above can be formed.

The method for producing starting material particles is not particularly limited, and known production methods can be used. For $HoCu_2$, (Er, Dy, Gd)Ni, and like particles, a method for solidifying molten metal of particles having a specific size that are prepared by various atomizing methods including a plasma rotating electrode process or a gas atomizing process, a method for pulverizing an ingot into granular powder having a specific shape, etc., can be used.

There is no limitation on the method for adjusting the particle size and particle size distribution of the starting material particles. For example, the particle size and particle size distribution of the starting material particles can be adjusted by 1) the step of making the particle size close to the target particle size by adjustment (e.g., adjustment of the molding parameter using an atomizing process etc., and adjustment of the electrode rotation speed in a rotating electrode process) in the production step of the starting material particles; 2) the step of classifying the obtained starting material particles; and optionally 3) the step of conducting mixing for adjusting particle size distribution (e.g., the step of performing adjustment mixing using classified powder).

The sintering conditions are the same as those for obtaining the sintered body (the sintering conditions of the starting material particles).

The sintered body of rare earth element-containing particles can be formed through the above steps. The obtained sintered body as is can be used as a regenerator material, or a combination of the obtained sintered body with other constituent materials can be used as a regenerator material.

According to the above production method, the regenerator material can be produced by a simple process. Moreover, since the starting material particles used in the production can also be easily prepared by adjusting the particle size and particle size distribution to appropriate ranges, the yield of the starting material particles can be increased.

## 3. Regenerator and Refrigerator

As explained above, a regenerator can be formed by charging the regenerator material of the present invention alone or in combination with other regenerator materials. For example, a regenerator can be formed by charging the regenerator material into the filling container provided in the regenerator.

Since the regenerator material contains a sintered body having a specific porosity, the filling rate of the regenerator material in the regenerator can be 60 to 70%. This allows the refrigerant gas in the regenerator to have an appropriate range of pressure loss, consequently enabling achievement of a cryogenic temperature state.

Accordingly, the regenerator can be used for various refrigerators. Examples of refrigerators include refrigerators for producing liquid hydrogen (20K dedicated refrigerators), 10K dedicated refrigerators, 4KGM refrigerators, etc. The refrigerator containing the regenerator can efficiently achieve a cryogenic temperature state.

Examples

The present invention is explained in detail below with reference to Examples; however, the present invention is not limited to these Examples.

Examples 1 to 8 and Comparative Examples 1 to 3

$HoCu_2$ particles were produced by a known atomizing method. Fine particles and coarse particles were removed from the resulting $HoCu_2$ particles using a 100-$\mu$m sieve and a 300-$\mu$m sieve (Examples 1 to 5 and Comparative Examples 1 and 3), or a 200-$\mu$m sieve and a 400-$\mu$m sieve (Examples 6 to 8, and Comparative Example 2). Thus, starting material particles having the particle size and particle size distribution shown in Table 1 below were obtained. The obtained starting material particles were subjected to differential thermal analysis (DTA) to obtain the melting point of $HoCu_2$ particles.

Subsequently, 200 g of the starting material particles was charged into a silica tube having an inner diameter of 29.8 mm, which was used as a mold for a sintered body. After the tube was placed in a heat treatment furnace, sintering was performed under argon atmosphere to thereby obtain a sintered body. The sintering temperature and sintering time were as shown in Table 1. The sintering temperature was determined to be 99% or less of the melting point obtained as above. For example, because the melting point of the starting material particles used in Example 1 was about 1188K (about 915°C), the sintering temperature was set to be 1168K (895°C).

Pressure Loss Measurement

The pressure loss of the sintered bodies obtained in the Examples and Comparative Examples was measured using a pressure loss evaluation system.

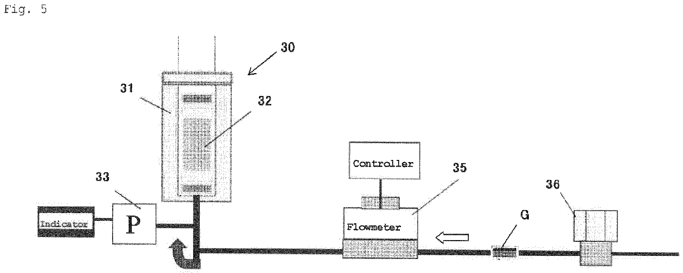

The schematic view of Fig. 5 shows the pressure loss evaluation system 30 used in the above measurement. Each sintered body 32 was inserted in a plastic tube 31 having an inner diameter of 28 mm to set a regenerator material (sintered body), and a flow rate/pressure loss test was performed using argon (Ar) as a fluid (refrigerant gas G). The value of a manometer 33 at the side of the inlet of a test sample was defined as P1 and a manometer (not shown) at the side of the outlet was defined as P2, and the pressure drop $\Delta P$ ($\Delta P$ = P1 - P2) before and after the introduction of the test sample was measured. While the flow rate of the refrigerant gas G was measured using a flowmeter 35, the flow rate was adjusted with a mass flow controller (not shown), and the pressure (P1) at the side of the inlet was kept constant by adjusting a pressure regulator 36.

The pressure loss was measured using the measurement system above, and regenerating performance was evaluated based on the following criteria.

Criteria:

A: The porosity was lower than that of the spherical powder of Reference Example 1. The pressure loss was 0.050 MPa or more, and 0.070 MPa or less.

B: The porosity was the same as or lower than that of the spherical powder of Reference Example 1. The pressure loss was 0.040 MPa or more, and less than 0.050 MPa.

C: The porosity was the same as or higher than that of the spherical powder of Reference Example 1; and the pressure loss was 0.035 MPa or more, and less than 0.040 MPa. Alternatively, the porosity was lower than that of the spherical powder of Reference Example 1; however, the pressure loss exceeded 0.070 MPa, and was 0.075 MPa or less.

D: The porosity was below 30%, or the pressure loss was less than 0.035 MPa. Alternatively, the porosity exceeded 40%, and the pressure loss exceeded 0.075 MPa.

The pressure loss is an index for determining heat exchange performance. For example, if the pressure loss is in the range of 0.035 to 0.07 MPa, and more desirably in the range of 0.04 to 0.07 MPa when a sintered body or powder (both 200 g) that is formed to fit in the tube 31 of the measurement system is placed in the tube 31, and 50 NL/min of nitrogen flows, it can be said that the regenerator material attains excellent regenerating performance.

Porosity

The porosity of the regenerator material (sintered body) was calculated from the following formula (1). Porosity (%) of sintered body =$\{1-A/(BxC)\}$ x100 (1) wherein A is the actual weight of the sintered body, B is the appearance volume of the sintered body, and C is the specific gravity of the sintered body. The appearance volume of the sintered body was measured based on the size of the sintered body.

Reference Example 1

$HoCu_2$ particles were produced in the same manner as in Example 1, and starting material particles having a particle size and particle size distribution shown in Table 1 were obtained. The resulting starting material particles were charged into the plastic tube 31 having an inner diameter of 28 mm without sintering. In the charging, a highly air-permeable felt (i.e., low pressure loss) used as a filter and a wire net used as a backup were introduced into the tube 31, and then 200 g of the starting material particles was introduced thereon. A similar felt and wire net were further placed on the charged starting material particles so that the starting material particles were sandwiched between a pair of felt. Under the state where the starting material particles were thus charged, the pressure loss measurement was performed. The porosity in this case was calculated by obtaining the appearance volume of the filling portion of the starting material particles from the distance between the pair of felt and the diameter of the tube 31, and dividing the volume of 200 g of the starting material particles by the appearance volume.

Table 1 shows the values of D10 ($\mu$m), D50 ($\mu$m), D90 ($\mu$m), and D90/D10 of each sintered body obtained in the Examples and Comparative Examples; sintering temperature; sintering time; porosity (%) of each sintered body; filling rate (%) obtained when each sintered body is charged into the regenerator; pressure loss; and evaluation results of regenerating performance.

In the Examples, it was confirmed that all had excellent regenerating performance, because the filling rate was in the range of 30 to 40%.

As in Reference Example 1, the use of conventional spherical powder etc. alone rather than the use of a sintered body, could not easily increase the filling rate, and it was also difficult to adjust the filling rate to a specific range when the value of D90/D10 was large. However, in the Examples, the filling rate could be adjusted (increased) in a wide range of D90/D10. Since Reference Example 1 does not use a sintered body, a problem such as clogging of flow caused by fine particles easily occurs; however, the sintered bodies obtained in the Examples are not likely to cause such a problem. It can be said that the sintered bodies of the Examples that are capable of adjusting the pressure loss to an appropriate range are suitable as regenerator materials for achieving a desired cryogenic temperature region.

Table 1

| Example/ Comparative Example | $D_{10}$ (µm) | $D_{50}$ (µm) | $D_{90}$ (µm)) | $D_{90}/D_{10}$ | Sintering temperature (°C) /hour (h) | Porosity (%) | Filling rate (%) | Pressure loss (MPa) | Regenerating performance |
|---|---|---|---|---|---|---|---|---|---|
| Example 1 | 143.35 | 191.73 | 262.16 | 1.83 | 895/5 | 30.0 | 70.0 | 0.066 | A |
| Example 2 | 143.35 | 191.73 | 262.16 | 1.83 | 890/5 | 33.2 | 66.8 | 0.066 | A |
| Example 3 | 143.35 | 191.73 | 262.16 | 1.83 | 890/4 | 34.0 | 66.0 | 0.064 | A |
| Example 4 | 179.79 | 232.11 | 314.91 | 1.75 | 895/4 | 32.9 | 67.1 | 0.053 | A |
| Example 5 | 179.79 | 232.11 | 314.91 | 1.75 | 890/4 | 34.2 | 65.8 | 0.047 | B |
| Example 6 | 221.20 | 281.28 | 375.27 | 1.70 | 885/4 | 36.3 | 63.7 | 0.041 | B |
| Example 7 | 221.20 | 281.28 | 375.27 | 1.70 | 885/4 | 36.5 | 63.5 | 0.042 | B |
| Example 8 | 257.19 | 296.98 | 367.81 | 1.43 | 890/8.5 | 39.0 | 61.0 | 0.035 | C |
| Comparative Example 1 | 143.35 | 191.73 | 262.16 | 1.83 | 890/2.5 | 27.7 | 72.3 | 0.091 | D |
| Comparative Example 1 | 221.20 | 281.28 | 375.27 | 1.70 | 885/2.5 | 41.0 | 59.0 | 0.025 | D |
| Comparative Example 1 | 143.35 | 191.73 | 262.16 | 2.21 | 890/10 | 28.9 | 71.1 | 0.075 | D |
| Reference Example 1 | 160.95 | 200.61 | 258.14 | 1.60 | - | 36.5 | 63.5 | 0.050 | - |

Description of Reference Numerals

10:  Sintered body

11:  Sintered portion

12:  Void portion

13:  Particle

## Claims

1.  A regenerator material comprising a sintered body of rare earth element-containing particles, wherein the sintered body has a porosity of 30 to 40%.

2.  The regenerator material according to claim 1, wherein at least a side of the sintered body is covered with a sintered layer, and the sintered layer has a porosity lower than the porosity of the sintered body.

3.  The regenerator material according to claim 1 or 2, wherein the sintered body is tapered.

4.  The regenerator material according to any one of claims 1 to 3, wherein the rare earth element includes at least one member selected from the group consisting of Ho, Er, Dy, Tb, Yb, and Gd.

5.  A method for producing the regenerator material according to any one of claims 1 to 4, the method comprising the step of sintering rare earth element-containing starting material particles, wherein D50 and D90/10 of the starting material particles are respectively 100 to 320 $\mu$m and 1.5 to 2.5, wherein D10, D50, and D90 indicate the average particle sizes that respectively correspond to the 10th, 50th, and 90th percentiles of the total number of particles in a particle size distribution curve.

6.  A regenerator comprising the regenerator material according to any one of claims 1 to 4.

7.  A refrigerator comprising the regenerator according to claim 6.

Fig. 1

Fig. 2

Fig. 3

Fig. 4

Fig. 5

**EP 3 561 021 A1**

<table>
<tr><td colspan="2" align="center">**INTERNATIONAL SEARCH REPORT**</td><td>International application No.<br><br>PCT/JP 2017/046174</td></tr>
</table>

| A. CLASSIFICATION OF SUBJECT MATTER |
|---|
| Int.Cl. C09K5/14(2006.01)i, F25B9/00(2006.01)i, F28D20/00(2006.01)i |
| According to International Patent Classification (IPC) or to both national classification and IPC |

| B. FIELDS SEARCHED |
|---|
| Minimum documentation searched (classification system followed by classification symbols)<br>Int.Cl. C09K5/14, F25B9/00, F28D20/00, C01F17/00 |
| Documentation searched other than minimum documentation to the extent that such documents are included in the fields searched<br>Published examined utility model applications of Japan 1922–1996<br>Published unexamined utility model applications of Japan 1971–2018<br>Registered utility model specifications of Japan 1996–2018<br>Published registered utility model applications of Japan 1994–2018 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2003-306673 A (KONOSHIMA CHEMICAL CO., LTD.) 31 October 2003, claims 1-13, paragraphs [0023]-[0038], examples 1-5, fig. 1, 2<br>(Family: none) | 1-2, 4, 6-7<br>3, 5 |
| X<br>A | JP 2004-123884 A (KONOSHIMA CHEMICAL CO., LTD.) 22 April 2004, claims 1-12, paragraphs [0012]-[0021], examples, fig. 1-5<br>(Family: none) | 1-2, 4, 6-7<br>3, 5 |
| X<br>A | JP 2000-1670 A (SHIN ETSU CHEMICAL CO., LTD.) 07 January 2000, claims 1, 2, paragraphs [0005]-[0009], examples 1, 5<br>(Family: none) | 1, 4-7<br>2-3 |

☒ Further documents are listed in the continuation of Box C.   ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>23 January 2018 | Date of mailing of the international search report<br>06 February 2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

17

**INTERNATIONAL SEARCH REPORT**

| International application No. |
| --- |
| PCT/JP2017/046174 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 8-226718 A (TOSHIBA CORPORATION) 03 September 1996,<br>claims 1, 2, paragraphs [0001], [0011]-[0023], examples<br>1-3<br>(Family: none) | 1, 4-7<br>2-3 |
| X<br>A | JP 5-203272 A (TOSHIBA CORPORATION) 10 August 1993,<br>claims 1-3, paragraphs [0001], [0011]-[0023], examples<br>1-4<br>(Family: none) | 1, 4-7<br>2-3 |
| A | WO 2016/047419 A1 (TOSHIBA CORPORATION) 31 March 2016,<br>paragraphs [0016]-[0053], examples 1-6, claims 1-15,<br>fig. 1, 2<br>& US 2017/0275176 A1, paragraphs [0020]-[0064],<br>examples 1-6, claims 1-15, fig. 1, 2 & EP 3199608 A1<br>& CN 106715637 A | 1, 4, 6-7<br>2-3, 5 |
| A | JP 2004-75884 A (KONOSHIMA CHEMICAL CO., LTD.) 11 March<br>2004, claims 1-7<br>(Family: none) | 1-7 |
| A | JP 11-264618 A (TOSHIBA CORPORATION) 28 September 1999,<br>claims 1-15<br>(Family: none) | 1-7 |
| A | JP 5-156241A (SUMITOMO HEAVY INDUSTRIES) 22 June 1993,<br>claims 1-3<br>(Family: none) | 1-7 |

Form PCT/ISA/210 (continuation of second sheet) (January 2015)

**EP 3 561 021 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010077447 A